# EUROPEAN PATENT APPLICATION

(11) **EP 2 400 802 A1**
(43) Date of publication of application: **28.12.2011**
(21) Application number: 11005201.6
(22) Date of filing: 27.06.2011
(51) Int. Cl.: H04W 52/14

(54) **Method of handling transmit power control and control signaling and related communication device**

(30) Priority: 25.06.2010 US 358644 P
(71) Applicant: HTC Corporation, Taoyuan County 330 (TW)
(72) Inventor: Jen, Yu-Chih, Taoyuan City Taoyuan County 330 (TW)
(74) Representative: Klang, Alexander H.

(57) **Abstract**

A method of handling a plurality of transmit power control TPC commands for a mobile device in a wireless communication system is disclosed. The method comprises receiving a plurality of downlink DL grants for a plurality of physical DL shared channel PDSCH transmissions from a network of the wireless communication system, the plurality of DL grants comprising the plurality of TPC commands; and deriving at least one TPC command for power control of at least one physical uplink UL control channel PUCCH transmission by using the plurality of TPC commands.

## Description

### Background of the Invention

### 1. Field of the Invention

The present invention relates to a method used in a wireless communication system and related communication device, and more particularly, to a method of handling transmit power control and control signaling in a wireless communication system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control.

UL control information in the LTE system includes an acknowledgement/negative acknowledgement (ACK/NACK) for downlink (DL) data, a channel quality indicator (CQI), a scheduling request (SR) and multiple-input multiple-output (MIMO) parameters of the UE. The UE may transmit the UL control information by using a dedicated resource. In this situation, the UE transmits the UL control information to an eNB on a physical uplink (UL) control channel (PUCCH) in the LTE system. Resource blocks allocated to the PUCCH in a subframe, i.e., a PUCCH region, locate on edges of a system bandwidth for a low out of band (OOB) emission and a low constraint on UL data scheduling. Besides, the resource blocks hop within slots (intra-subframe hopping) or between slots (inter-subframe hopping) for gaining frequency diversity. On the other hand, the UE may also transmit the UL control information along with data. In this situation, the UE first multiplexes the UL control information and the data, and then transmits the multiplexed result to the eNB on a physical uplink shared channel (PUSCH) in the LTE system. Please note that, the UE can only select the one of the PUCCH and the PUSCH to transmit the UL control information but not both so as to maintain a single carrier property, i.e., a low peak to average power ratio (PAPR).

Power control is used in the LTE system to avoid UEs in the same cell or in different cells interfering with each other. When an eNB performing the power control on a UE, the eNB transmits a transmit power control (TPC) command to indicate the UE to adjust transmission power. There are two kinds of TPC commands: an accumulative TPC command and an absolute TPC command. More specifically, the accumulative TPC command can be applied to a PUSCH, a PUCCH, and the absolute TPC command can only be applied to PUSCH. For the accumulative TPC command, the eNB indicates one or multiple steps of power adjustment to the UE at a time, and the UE adds or subtracts the one or the multiple step of the power adjustment to or from the transmission power, respectively. On the other hand, for the absolute TPC command, the eNB can only indicate one step of the power adjustment to the UE, and the UE adds or subtracts the one step of the power adjustment to or from the transmission power, respectively. The absolute TPC command adjusts the transmission power faster than the accumulative TPC command by using a larger step value. However, the maximum range of the transmission power of the UE that the absolute TPC command can adjust is only between -4dB and 4dB, and the accumulative TPC command can adjust the transmission power of the UE with a much wider range by using a sequence of steps of the power adjustment. Further, the UE determines and performs the TPC command according to a format of the TPC command and a radio resource control (RRC) configuration configured by the eNB.

Besides, the eNB transmits the TPC command to the UE on a physical downlink control channel (PDCCH). In detail, the eNB may transmit the TPC command along with a UL grant to the UE on the PDCCH, or by using a dedicated message to the UE with special formats, such a PDCCH Format 3 or a PDCCH Format 3A. A strategy based on which the eNB adjusts the transmission power of the UE may be received signal-to-interference ratio (SIR) on the UL, block error rate (BLER) after performing decoding received signal on the UL or interference coordination with neighboring cells. Please note that, the eNB may also perform group power control on a group of UEs at the same time, i.e., indicating the group of the UEs to adjust their transmission power. In this situation, a radio network temporary identifier (RNTI) is first used to identify the group of the UEs. Particularly, the eNB transmits TPC command messages scrambled by a TPC-PUCCH-RNTI or a TPC-PUSCH-RNTI to adjust the transmission power for transmitting the PUCCH or the PUSCH, respectively.

A long term evolution-advanced (LTE-A) system, as its name implies, is an evolution of the LTE system. The LTE-A system targets faster switching between power states, improves performance at the coverage edge of an eNB, and includes subjects, such as bandwidth extension, coordinated multipoint transmission/reception (CoMP), UL multiple-input multiple-output (MIMO), etc.

For bandwidth extension, a carrier aggregation (CA) is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. The LTE-A system supports the CA for both continuous and non-continuous component carriers with each component carrier limited to a maximum of 110 resource blocks. The CA increases bandwidth flexibility by aggregating the non-continuous component carriers. A component carrier is either used as a UL component carrier or a DL component carrier, but not both.

When the UE is configured with the CA, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resources. The UL and DL primary component carriers are used for establishing and re-establishing the radio resource control (RRC), and transmitting and receiving the system information.

When the eNB transmits multiple DL grants on multiple DL component carriers, the eNB also transmits multiple TPCs along with the multiple DL grants for feeding back ACK/NACKs corresponding to the DL grants. In this situation, the UE may need to feedback the ACK/NACKs on a UL component carrier. However, it is not known how to apply the multiple TPCs to feeding back the ACK/NACKs on the UL component carrier. For example, if the eNB transmits the multiple DL grants with the multiple TPCs to the UE where each TPC indicates a step of "+3dB", the UE may simply add all these steps to original transmission power such that the UE uses excessive power to feedback the ACK/NACKs on the UL component carrier. In this situation, the UE may runs out of battery in a few transmissions. On the other hand, if the eNB transmits the multiple DL grants with the multiple TPCs to the UE where each TPC indicates a step of "-3dB" , the UE may simply subtracts all these steps from the original transmission power such that the UE uses insufficient power to feedback the ACK/NACKs, and the eNB may not receive the ACK/NACKs correctly. Therefore, how to handle the multiple TPCs received on the multiple DL component carriers is a topic for discussion. Besides, group power control for the PUCCH and the PUSCH defined by the TPC-PUCCH-RNTI and the TPC-PUSCH-RNTI, respectively, is defined for a single component carrier in the LTE system cannot be directly to the LTE-A system with multiple component carriers, transmission layers, cells, antenna ports or access points. Accordingly, parameters and protocols as well as respective signalings related to the TPC-PUCCH-RNTI and the TPC-PUSCH-RNTI in the LTE system must be extended or modified for the LTE-A system.

### Summary of the Invention

The present invention therefore provides a method and related communication device for handling transmit power control and control signaling to solve the abovementioned problems.

A method of handling a plurality of transmit power control (TPC) commands for a mobile device in a wireless communication system is disclosed. The method comprises receiving a plurality of downlink (DL) grants for a plurality of physical DL shared channel (PDSCH) transmissions from a network of the wireless communication system, the plurality of DL grants comprising the plurality of TPC commands; and deriving at least one TPC command for power control of at least one physical uplink (UL) control channel (PUCCH) transmission by using the plurality of TPC commands.

A method of handling power control for a network of a wireless communication system is disclosed. The method comprises configuring at least one identity and at least one index to a mobile device in the wireless communication system, for the mobile device to apply the power control to a plurality of transmissions associated with a plurality of component carriers, a plurality of access points, a plurality of cells, a plurality of transmission layers or a plurality of antenna ports according to the at least one identity, the at least one index or both.

A method of handling group power control of an uplink (UL) channel for a network of a wireless communication system is disclosed. The method comprises configuring at least one identity to a mobile device in the wireless communication system for the group power control of the UL channel, wherein each of a plurality of power control groups is defined by one of the at least one identity, and at least one index is associated with or assigned to the each of the plurality of power control groups.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary wireless communication system according to the present disclosure.

Fig. 2 is a schematic diagram of an exemplary communication device according to the present disclosure.

Fig. 3 is a schematic diagram of communication protocol layers for an exemplary wireless communication system.

Fig. 4 is a flowchart of an exemplary process according to the present disclosure.

Fig. 5 is a flowchart of an exemplary process according to the present disclosure.

Fig. 6 is a flowchart of an exemplary process according to the present disclosure.

### Detailed Description

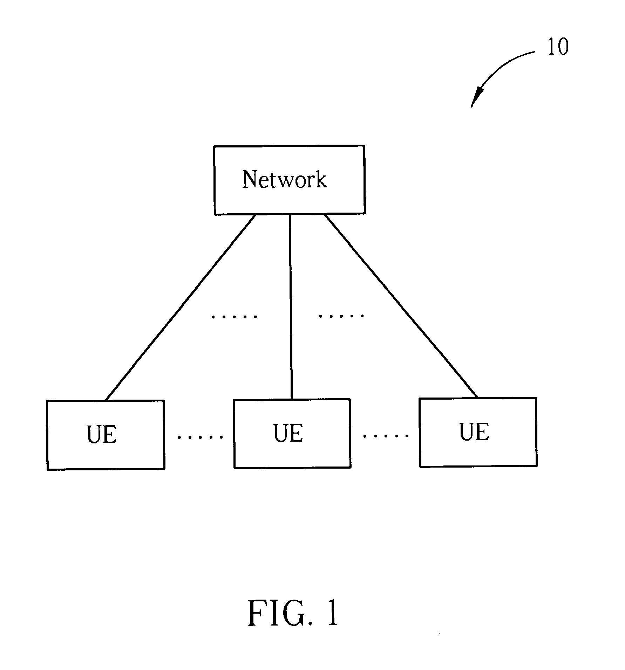

Please refer to Fig. 1, which is a schematic diagram of a wireless communication system 10 according to an example of the present invention. The wireless communication system 10, such as a long term evolution-advanced (LTE-A) system or other mobile communication systems supporting a carrier aggregation (CA), is briefly composed of a network and a plurality of user equipments (UEs). In Fig. 1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be mobile devices such as mobile phones, laptops, tablet computers, electronic books, and portable computer systems. Besides, the network and a UE can be seen as a transmitter or receiver according to transmission direction, e.g., for an uplink (UL), the UE is the transmitter and the network is the receiver, and for a downlink (DL), the network is the transmitter and the UE is the receiver.

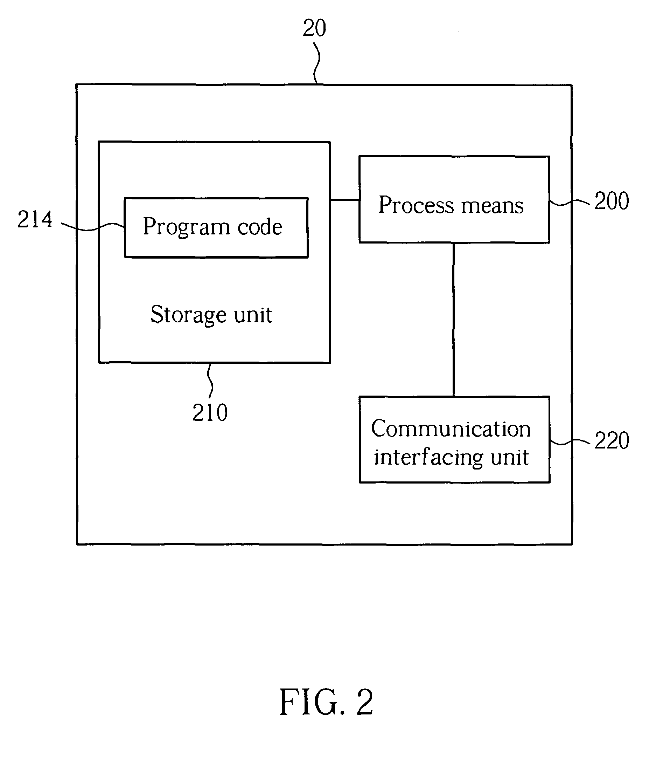

Please refer to Fig. 2, which is a schematic diagram of a communication device 20 according to an example of the present invention. The communication device 20 can be the UE or the network shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processor 200.

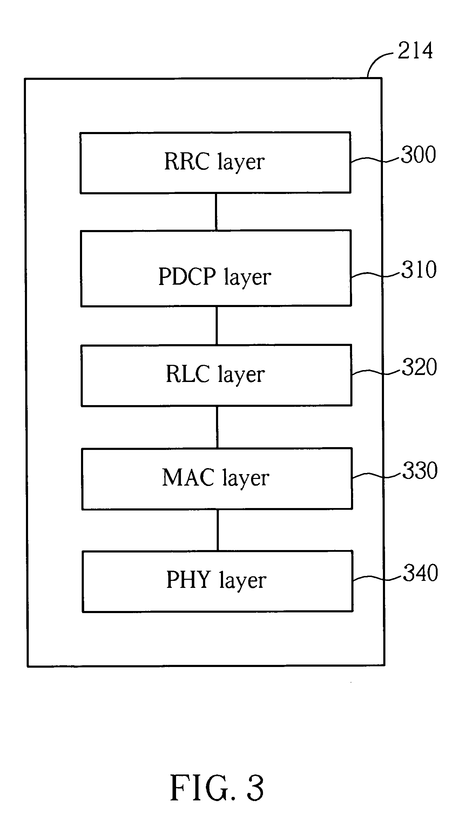

Please refer to Fig. 3, which illustrates a schematic diagram of communication protocol layers for the LTE-Advanced system. The behaviors of some of the protocol layers may be defined in the program code 214 and executed by the processing means 200. The protocol layers from top to bottom are a radio resource control (RRC) layer 300, a packet data convergence protocol (PDCP) layer 310, a radio link control (RLC) layer 320, a medium access control (MAC) layer 330 and a physical (PHY) layer 340. The RRC layer 300 is used for performing broadcast, paging, RRC connection management, measurement reporting and control and radio bearer control responsible for generating or releasing radio bearers. The PHY layer 340 is used to provide physical channels, e.g. a physical UL control channel (PUCCH) and a physical DL control channel (PDCCH), such that UL control information and data of different UEs can be transmitted and received with low interferences or even without the interferences. The MAC layer 330 is responsible for a hybrid automatic repeat request (HARQ) process, multiplexing logical channels, a random access channel (RACH) procedure and maintaining a UL timing alignment. In each HARQ process, an acknowledgement (ACK) is reported to the network if the MAC data/control packet is received and decoded successfully. Otherwise, a negative acknowledgement (NACK) is reported to the network.

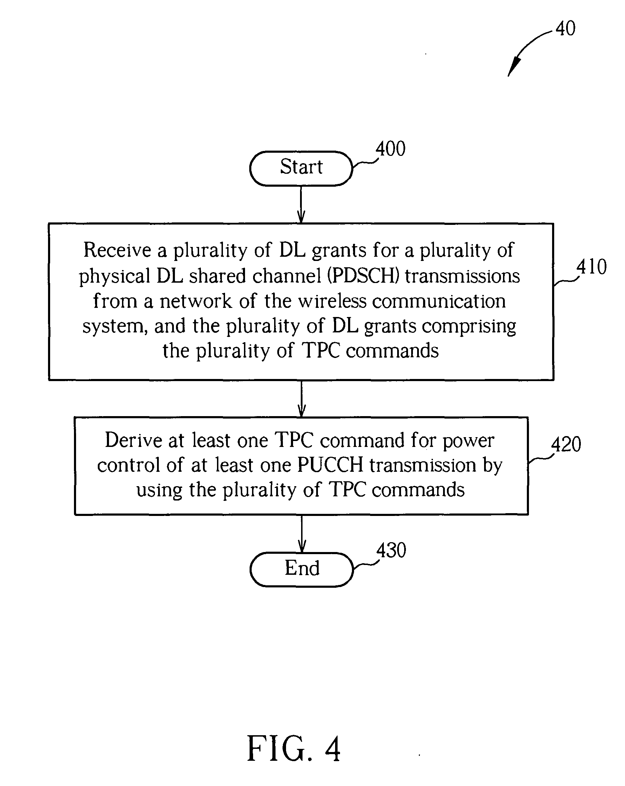

Please refer to Fig. 4, which is a flowchart of a process 40 according to an example of the present disclosure. The process 40 is utilized in a UE of the wireless communication system 10 shown in Fig. 1, to handle a plurality of transmit power control (TPC) commands. The process 40 may be compiled into the program code 214 and includes the following steps:

Step 400: Start.

Step 410: Receive a plurality of DL grants for a plurality of physical DL shared channel (PDSCH) transmissions from a network of the wireless communication system, and the plurality of DL grants comprising the plurality of TPC commands.

Step 420: Derive at least one TPC command for power control of at least one PUCCH transmission by using the plurality of TPC commands.

Step 430: End.

According to the process 40, after the UE receives the plurality of DL grants for the plurality of PDSCH transmissions from the network of the wireless communication system, where the plurality of DL grants comprises the plurality of TPC commands (e.g. for the at least one PUCCH transmission), the UE does not directly use the plurality of TPC commands, but derives the at least one TPC command for the power control of the at least one PUCCH transmission (e.g. feeding back to corresponding PDSCH transmissions) by using the plurality of TPC commands. In other words, the UE does not directly use all the plurality of TPC commands for the power control of the at least one PUCCH transmission, but derives the at least one TPC command by using the plurality of TPC commands. Then, the UE uses the at least one TPC command for the power control of the at least one PUCCH transmission. Further, a granularity of the plurality of TPC commands can be predefined in the UE or can be configured to the UE by the network. Alternatively, a finite number of value sets of the plurality of TPC commands can be predefined in the UE or can be configured to the UE by the network.

Besides, a upper bound or a lower bound of power control range of the at least one TPC command can be predefined in the UE or can be configured to the UE by the network. Then, after the UE derives the at least one TPC command, the UE applies the upper bound of the power control range of the at least one TPC command to the at least one PUCCH transmission (e.g. corresponding to at least one first TPC command of the at least one TPC command), if power control range of the at least one first TPC command of the at least one TPC command is equal to or larger than the upper bound of the power control range of the at least one TPC command. Alternatively, the UE applies the lower bound of the power control range of the at least one TPC command to the at least one PUCCH transmission (e.g. corresponding to at least one second TPC command of the at least one TPC command), if power control range of the at least one second TPC command of the at least one TPC command is equal to or smaller than the lower bound of the power control range of the at least one TPC command.

On the other hand, the UE can derive the at least one TPC command for the power control of the at least one PUCCH transmission (e.g. corresponding to PDSCH transmissions) by combining the plurality of TPC commands in groups. For example, the UE can divide the plurality of TPC commands into N groups of TPC commands, and derive corresponding N derived TPC commands according to the N groups of TPC commands. The N derived TPC commands are used for corresponding N PUCCH transmissions. The UE can also derive the at least one TPC command for the power control of the at least one PUCCH transmission (e.g. corresponding to PDSCH transmissions) by using a set of the plurality of TPC commands according to a certain rule. For example, the UE can select M TPC commands from the plurality of TPC commands, and derive corresponding M derived TPC commands according to the M TPC commands. The M derived TPC commands are used for corresponding M PUCCH transmissions. Further, a number of PUCCH transmissions relates to a number of PDSCH transmissions. Preferably, the certain rule can be a result of channel estimation or measurement, transmission status of previous at least one UL transmission or at least one signaling, a number of the plurality of TPC commands with the smallest absolute value of power adjustment or the lowest TPC command of the plurality of TPC commands (e.g. the network knows at least one PUCCH for feedback of PDSCH transmissions).

After receiving receiving the plurality of TPC commands, the UE may also directly applying at least one of the plurality of TPC commands to the power control of the at least one PUCCH transmission (e.g. corresponding to PDSCH transmissions) without further processing of the plurality of TPC commands. In this situation, the plurality of TPC commands should be the same, of a same trend (e.g. increasing or decreasing) or of a similar power control range, for the UE to apply the the plurality of TPC commands correctly to the at least one PUCCH transmission.

Besides, the UE may apply only one of the plurality of TPC commands to the power control of the at least one PUCCH transmission. In this situation, the only one of the plurality of TPC commands is comprised in a DL grant of one of the plurality of PDSCH transmissions or is comprised in a DL grant corresponding to a PDSCH transmission on a DL component carrier which is mandated, configured, signaled or priority-specified for the determination or selection of the only one of the plurality of TPC commands. Alternatively, the only one of the plurality of TPC commands is of the highest priority among the plurality of TPC commands or is the TPC command comprised in a DL grant for a PDSCH transmission on DL primary component carrier.

Therefore, according to above illustrations, four realizations are summarized as follows:

Realization 1: For each group associated with a PUCCH, combine TPC commands with possible newly defined granularity in groups to form derived TPC command(s), each for a PUCCH.

Realization 2: For each group associated with a PUCCH, combine TPC commands with defined granularity (e.g. as defined in 3GPP Rel-8) in groups to form derived TPC command(s), each with defined upper and lower bound of power control (adjustment) range for a PUCCH.

Realization 3: Select a certain number of TPC commands (e.g. with lowest difference of total power adjustment) for a PUCCH (may be jointly considered with channel status or previous transmission status or power adjustment bound).

Realization 4: Configure the same TPC commands from DL grants for PUCCH.

Realization 5: Refer to a TPC command in only one DL grant

Either Realization 1 or Realization 2 provides good flexibility in scheduling for power control. In both of the Realization 1 and Realization 2, the network considers jointly derivation of TPC commands in groups for each of PUCCH(s). Ideally, once the UE receives the TPC commands in DL grants, the UE derives TPC commands for each PUCCH(s) as expected by the network. However, since the UE may miss some DL grants, granularity and power adjustment bounds of the TPC commands should be justified and investigated according to the requirement of tolerance (e.g. for small granularity, miss detection of few DL grants should not have significant impact). Realization 3 provides good compromise on flexibility and simplicity on one hand, while it is not robust (due to missed grant) on the other hand. Realization 3 can make sure power adjustment in constraint level. As to Realization 4, this is the simplest and the most robust approach but can only offer a rough power adjustment with redundancy. For Realization 5, there are two ways around, by TPC in a configured/intended DL grant on a component carrier or TPC with highest/lowest power adjustment level.

Therefore, according to the above illustration and the process 40, when the UE receives the plurality of TPC commands from the network, the UE can drive the at least one TPC command first, and then applies the at least one TPC command to the at least one PUCCH transmission. Alternatively, the UE can use part of the plurality of TPC commands, if the plurality of TPC commands are the same or similar.

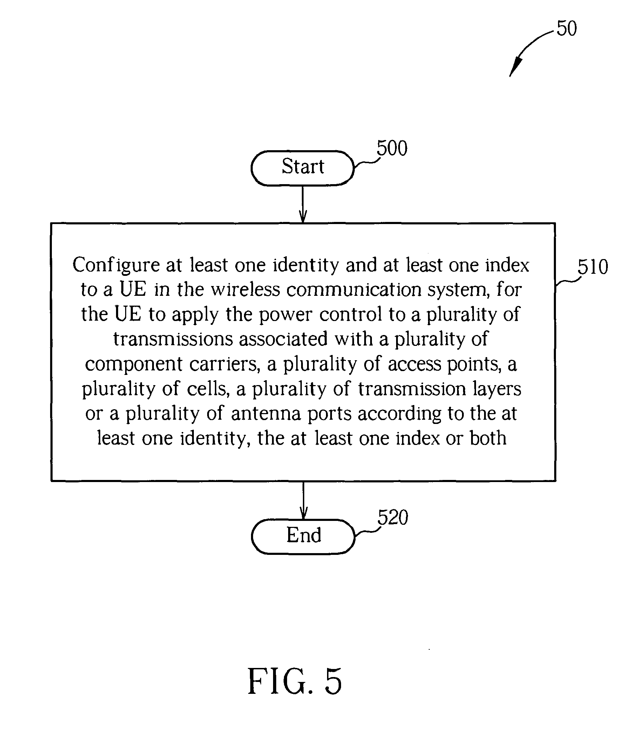

Please refer to Fig. 5, which is a flowchart of a process 50 according to an example of the present disclosure. The process 50 is utilized in the network of the wireless communication system 10 shown in Fig. 1, to handle power control. The process 50 may be compiled into the program code 214 and includes the following steps:

Step 500: Start.

Step 510: Configure at least one identity and at least one index to a UE in the wireless communication system, for the UE to apply the power control to a plurality of transmissions associated with a plurality of component carriers, a plurality of access points, a plurality of cells, a plurality of transmission layers or a plurality of antenna ports according to the at least one identity, the at least one index or both.

Step 520: End.

According to the process 50, for performing the power control on the UE, the network configures the at least one identity (e.g. at least one TPC-PUSCH-RNTI and/or TPC-PUSCH-RNTI) and the at least one index (e.g. at least one TPC-index) to the UE in the wireless communication system, such that the UE can apply the power control (group power control) to the plurality of transmissions associated with the plurality of component carriers, the plurality of access points, the plurality of cells, the plurality of transmission layers or the plurality of antenna ports according to the at least one identity (e.g. UE detects at least one RNTI of a DL control signaling and/or uses configured the at least one TPC-index to further look for corresponding at least one TPC command for corresponding multiple component carriers, access points, cells, transmission layers or antenna ports), the at least one index or both. More specifically, the at least one index is indexed to a plurality of TPC commands in a DL control signaling (e.g. PDCCH with downlink control information (DCI) format 3/3A) . Accordingly, the UE can use the at least one index to acquire the plurality of TPC commands in the DL control signaling, to apply the power control to the plurality of transmissions associated with the plurality of component carriers, the plurality of access points, the plurality of cells, the plurality of transmission layers or the plurality of antenna ports, after the UE receives the DL control signaling. Please note that, each of the at least one index corresponds to a series of TPC commands. After the UE receives the DL control signaling, the UE acquires and then applies the TPC commands for either PUCCH(s) or the PUSCH (s) only if the UE detects the DL signaling intended to either at least one TPC-PUCCH-RNTI or at least one TPC-PUSCH-RNTI, respectively.

On the other hand, the UE may be configured with the at least one identity (e.g. at least one TPC-PUSCH-RNTI) for each power control group or each power control group is defined by one of the at least one identity configured to the UE, and the at least one index is associated with or assigned to the each power control group, or at least one index corresponds to the one of the at least one identity. Further, each of the at least one index is associated with one of a set of the plurality of component carriers, one of a set of the plurality of access points, one of a set of the plurality of cells, one of a set of the plurality of transmission layers or one of a set of the plurality of antenna ports. Accordingly, the UE can use the at least one index (e.g. corresponding to the one of the at least one identity) to acquire at least one TPC command in a DL control signaling to apply the power control to at least one of the set of plurality of component carriers, at least one of the set of plurality of access points, at least one of the set of plurality of cells, at least one of the set of plurality of transmission layers or at least one of the set of plurality of antenna ports associated with the at least one index, when the UE detects the DL control signaling (e.g. a PDCCH) intended to one of the at least one identity.

For example, there are five UL component carriers which are respectively indexed by C1, C2, C3, C4 and C5. There are also two TPC-PUSCH-RNTIs which are respectively indexed by ID1 and ID2. Further, C1, C3 and C5 are linked to ID1, and C2 and C4 are linked to ID2. Besides, there are five TPC indices, Ind1, Ind2, Ind3, Ind4 and Ind5 which are respectively linked to the five UL component carriers. Therefore, TPC indices Ind1, Ind3 and Ind5 are linked to TPC-PUSCH-RNTI ID1, and TPC indices Ind2 and Ind4 are linked to TPC-PUSCH-RNTI ID2. In other words, many-to-one relation between the TPC indices and the TPC-PUSCH-RNTI is established. When the UE detects TPC-PUSCH-RNTI ID1, e.g., (Ind1, Ind3, Ind5)=(1, 7, 10), the UE finds the first, seventh and tenth TPC commands from a plurality of TPC commands, and apply the three TPC commands to PUCSCH transmissions on UL component carriers C1, C3 and C5. Therefore, according this example and what has been mentioned above, further clarifications are stated as follows. The plurality of component carriers refer to UL component carriers C1, C2, C3, C4 and C5. A set of the plurality of component carriers refers to UL component carriers C1, C3 and C5. One of a set of the plurality of component carriers refers to one of UL component carriers C1, C3 and C5. Each of the at least one index refers to one of TPC indices Ind1, Ind3 and Ind5.

On the other hand, there may be five TPC-PUSCH-RNTIs which are respectively indexed by ID1a, ID2a, ID3a, ID4a and ID5a and are linked to UL component carriers C1, C2, C3, C4 and C5, respectively. In this situation, TPC-PUSCH-RNTIs ID1a, ID2a, ID3a, ID4a and ID5a are linked to TPC indices, Ind1, Ind2, Ind3, Ind4 and Ind5, respectively. In other words, one-to-one relation between the TPC-PUSCH-RNTI and the TPC index is established.

To fulfill power control need, such method and linking relationship cannot only apply to transmissions on component carriers, but also transmissions by access points, cells, transmission layers or antenna ports.

Therefore, according to the above illustration and the process 50, when the network needs to perform the power control on the UE, the network configures the at least one identity and the at least one index to the UE such that the UE apply the power control to the plurality of transmissions associated with the plurality of component carriers, the plurality of access points, the plurality of cells, the plurality of transmission layers or the plurality of antenna ports according to the at least one identity, the at least one index or both.

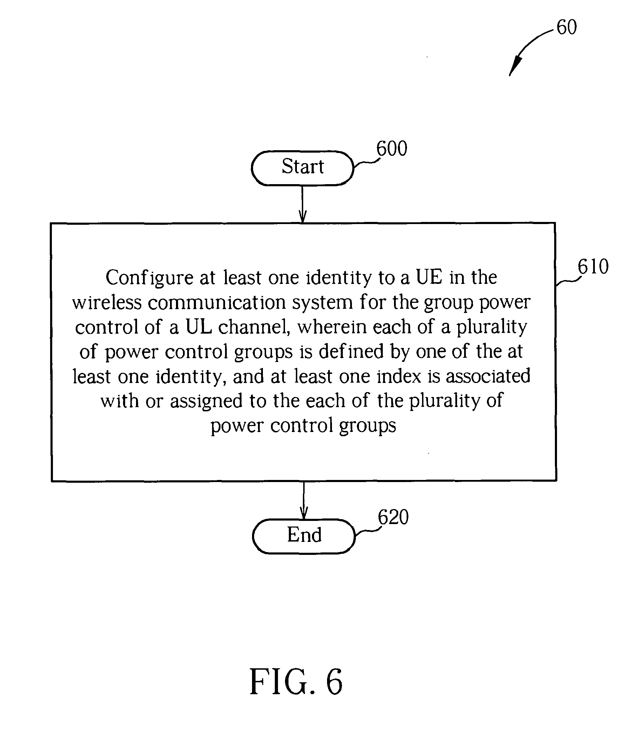

Please refer to Fig. 6, which is a flowchart of a process 60 according to an example of the present disclosure. The process 60 is utilized in the network of the wireless communication system 10 shown in Fig. 1, to handle group power control. The process 60 may be compiled into the program code 214 and includes the following steps:

Step 600: Start.

Step 610: Configure at least one identity to a UE in the wireless communication system for the group power control of a UL channel, wherein each of a plurality of power control groups is defined by one of the at least one identity, and at least one index is associated with or assigned to the each of the plurality of power control groups.

Step 620: End.

According to the process 60, for performing the group power control on the UE, the network configures the at least one identity (e.g. at least one TPC-PUSCH-RNTI) to the UE in the wireless communication system for the group power control of the UL channel (a PUSCH or a PUCCH), where the each of the plurality of power control groups is defined by the one of the at least one identity, and the at least one index is associated with or assigned to the each of the plurality of power control groups. More specifically, each of the at least one index is associated with one of a plurality of component carriers, one of a plurality of access points, one of a plurality of cells, one of a plurality of transmission layers or one of a plurality of antenna ports. Accordingly, the UE can use the at least one index (corresponding to the one of the at least one identity) to acquire at least one TPC command in a DL control signaling to apply the group power control to at least one of the plurality of component carriers, the plurality of access points, the plurality of cells, the plurality of transmission layers and the plurality of antenna ports associated with the at least one index, when the UE detects the DL control signaling intended to one of the at least one identity.

Therefore, according to above illustrations, three realizations are summarized as follows:

Realization 1: A pair of TPC-PUSCH-RNTI and TPC-Index for each configured UL component carrier.

Realization 2: A single TPC-PUSCH-RNTI for all configured UL component carriers and a TPC-Index for each configured UL component carrier.

Realization 3: At least one TPC-PUSCH-RNTI, each for defining a power control group; for each power control group defined by a TPC-PUSCH-RNTI, at least one TPC-index is assigned or associated; each pair corresponds to an UL component carrier.

For a UE, the Realization 1 provides more flexibility than the Realization 2 in sense of power control on different UL component carriers at different subframes. Note that Realization 2 updates all configured UL component carriers at the same time with possible different power adjustment levels. In case that certain UL component carrier does not require power adjustment, the TPC command indexed by the TPC-index associated with certain UL component carrier should be set to zero. The other way around for Realization 2 is to allow UE to apply TPC-Indices for active UL component carriers respectively which may require power adjustment. It is also good to allow simultaneous power adjustment to track the channel condition (e.g. fast fading) even for non-frequently used UL component carriers. Realization 3 provides full flexibility in conveying the group power control for multiple carriers.

Therefore, according to the above illustration and the process 60, when the network needs to perform the group power control on the UE, the network configures the at least one identity to the UE in the wireless communication system for the group power control of the UL channel, where the each of the plurality of power control groups is defined by the one of the at least one identity, and the at least one index is associated with or assigned to the each of the plurality of power control groups.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

In conclusion, when a UE is configured with multiple DL component carriers, the network may transmit multiple DL grants with multiple TPC commands on respective the multiple DL component carriers. If the UE directly apply the multiple TPC commands to transmission power of feeding back ACK/NACKs the multiple DL grants on a UL component carrier according to the prior art, the transmission power may be excessive or insufficient. Therefore, the present invention derive at least one derived TPC command using different methods to combine the multiple TPC commands, and apply the at least one derived TPC command to the transmission power of feeding back the ACK/NACKs, or in general PUCCH transmission. Therefore, the problem encountered in the prior art is well addressed.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a plurality of transmit power control TPC commands for a mobile device in a wireless communication system, the method comprising:
receiving a plurality of downlink DL grants for a plurality of
physical DL shared channel PDSCH transmissions from a network of the wireless communication system, the plurality of DL grants comprising the plurality of TPC commands (410);
**characterized by** deriving at least one TPC command for power
control of at least one physical uplink UL control channel PUCCH transmission by using the plurality of TPC commands (420).

2. The method of claim 1, wherein a granularity of the plurality of TPC commands is predefined in the mobile device or is configured to the mobile device by the network.

3. The method of claim 1, wherein a finite number of value sets of the plurality of TPC commands is predefined in the mobile device or is configured to the mobile device by the network.

4. The method of claim 1, wherein a upper bound or a lower bound of power control range of the at least one TPC command is predefined in the mobile device or is configured to the mobile device by the network.

5. The method of claim 4 further comprising:
applying the upper bound of the power control range of the at least
one TPC command to the at least one PUCCH transmission, if power control range of at least one first TPC command of the at least one TPC command is equal to or larger than the upper bound of the power control range of the at least one TPC command; or applying the lower bound of the power control range of the at least
one TPC command to the at least one PUCCH transmission, if power control range of at least one second TPC command of the at least one TPC command is equal to or smaller than the lower bound of the power control range of the at least one TPC command.

6. The method of claim 1, wherein deriving the at least one TPC command for the power control of the at least one PUCCH transmission by using the plurality of TPC commands comprises:
deriving the at least one TPC command for the power control of
the at least one PUCCH transmission by combining the plurality of TPC commands in groups.

7. The method of claim 1, wherein deriving the at least one TPC command for the power control of the at least one PUCCH transmission by using the plurality of TPC commands comprises:
deriving the at least one TPC command for the power control of
the at least one PUCCH transmission by using a set of the plurality of TPC commands according to a certain rule.

8. The method of claim 7, wherein the certain rule is a result of channel estimation or measurement, transmission status of previous at least one UL transmission or at least one signaling, a number of the plurality of TPC commands with the smallest absolute value of power adjustment or the lowest TPC command of the plurality of TPC commands.

9. The method of claim 1 further comprising:
applying at least one of the plurality of TPC commands to the power
control of the at least one PUCCH transmission, wherein the plurality of TPC commands are the same, of a same trend or of a similar power control range; or
applying only one of the plurality of TPC commands to the power
control of the at least one PUCCH transmission, wherein the only one of the plurality of TPC commands is comprised in a DL grant of one of the plurality of PDSCH transmissions, or is comprised in a DL grant corresponding to a PDSCH transmission on a DL component carrier which is mandated, configured, signaled or priority-specified for the determination or selection of the only one of the plurality of TPC commands.

10. The method of claim 9, wherein the only one of the plurality of TPC commands is of the highest priority among the plurality of TPC commands, or is the TPC command comprised in a DL grant for a PDSCH transmission on DL primary component carrier.

11. A method of handling power control for a network of a wireless communication system, the method **characterized by** comprising:
configuring at least one identity and at least one index to a mobile
device in the wireless communication system, for the mobile device to apply the power control to a plurality of transmissions associated with a plurality of component carriers, a plurality of access points, a plurality of cells, a plurality of transmission layers or a plurality of antenna ports according to the at least one identity, the at least one index or both (510).

12. The method of claim 11, wherein the at least one index is indexed to a plurality of transmit power control TPC commands in a downlink DL control signaling,
wherein preferably the mobile device uses the at least one index to acquire the plurality of TPC commands in the DL control signaling, to apply the power control to the plurality of transmissions associated with the plurality of component carriers, the plurality of access points, the plurality of cells, the plurality of transmission layers or the plurality of antenna ports, after the mobile device receives the DL control signaling.

13. The method of claim 11, wherein the mobile device is configured with the at least one identity for each power control group or the each power control group is defined by one of the at least one identity configured to the mobile device, and the at least one index is associated with or assigned to the each power control group or the at least one index corresponds to the one of the at least one identity, wherein each of the at least one index is associated with one of a set of the plurality of component carriers, one of a set of the plurality of access points, one of a set of the plurality of cells, one of a set of the plurality of transmission layers or one of a set of the plurality of antenna ports,
wherein preferably the mobile device uses the at least one index to acquire at least one TPC command in a DL control signaling, to apply the power control to at least one of the set of the plurality of component carriers, at least one of the set of the plurality of access points, at least one of the set of the plurality of cells, at least one of the set of the plurality of transmission layers and at least one of the set of the plurality of antenna ports associated with the at least one index, when the mobile device detects the DL control signaling intended to one of the at least one identity.

14. A method of handling group power control of an uplink UL channel for a network of a wireless communication system, the method **characterized by** comprising:
configuring at least one identity to a mobile device in the
wireless communication system for the group power control of the UL channel, wherein each of a plurality of power control groups is defined by one of the at least one identity, and at least one index is associated with or assigned to the each of the plurality of power control groups (610).

15. The method of claim 14, wherein each of the at least one index
is associated with one of a plurality of component carriers, one of a plurality of access points, one of a plurality of cells, one of a plurality of transmission layers or one of a plurality of antenna ports,
wherein preferably the mobile device uses the at least one index to acquire at least one transmit power control TPC command in a downlink DL control signaling to apply the group power control to at least one of the plurality of component carriers, the plurality of access points, the plurality of cells, the plurality of transmission layers and the plurality of antenna ports associated with the at least one index, when the mobile device detects the DL control signaling intended to one of the at least one identity.
